Europäisches Patentamt

European Patent Office

Office européen des brevets

(19)

(11) Veröffentlichungsnummer: **0 068 578**
**B1**

(12) **EUROPÄISCHE PATENTSCHRIFT**

(45) Veröffentlichungstag der Patentschrift:
**20.11.86**

(51) Int. Cl.⁴: **A 22 C 11/02**

(21) Anmeldenummer: **82200774.6**

(22) Anmeldetag: **23.06.82**

(54) Verfahren zum Füllen und Verschliessen von Würsten.

(30) Priorität: **01.07.81 DE 3125927**

(43) Veröffentlichungstag der Anmeldung:
**05.01.83 Patentblatt 83/1**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**CH - A - 473 004
DE - A - 2 018 454
DE - B - 1 165 480
GB - A - 1 198 687
US - A - 3 066 461
US - A - 3 529 646
US - A - 3 703 796**

(73) Patentinhaber: **Niedecker, Herbert, Dipl.-Ing., Am Ellerhang 6, D-6240 Königstein 2 (DE)**

(72) Erfinder: **Niedecker, Herbert, Dipl.-Ing., Am Ellerhang 6, D-6240 Königstein 2 (DE)**

(74) Vertreter: **Fischer, Ernst, Dr., Reuterweg 14, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Füllen und Verschliessen von Würsten auf einer kombinierten Füll- und Verschliessmaschine.

Es ist bekannt (DE-A-1 411 489), zum Füllen und Verschliessen von Würsten den für die Wurst benötigten Darm von einer Folienrolle abzuziehen und auf einem Füllrohr herzustellen, und zwar in der Weise, dass die Folie auf dem Füllrohr über eine Formschulter zu einem Schlauch mit überlappenden Kanten gebildet wird, die anschliessend verschweisst werden. Hierbei wird die Wursthülle beim Füllen durch den Fülldruck vom Füllrohr abgezogen und portionsweise gefüllt und anschliessend vor dem Füllrohrende verschlossen. Diese Arbeitsweise eignet sich im wesentlichen nur für Würste mit verhältnismässig dünnflüssigem Füllgut, bei denen keine besonders pralle Füllung erforderlich ist, da sie meistens anschliessend nachgeschrumpft werden.

Es ist ausserdem bekannt, beim Füllen und Verschliessen von Würsten mit einem besonders steifen Füllgut, bei denen die Gefahr besteht, dass die Wursthülle nicht prall gefüllt wird, eine Darmbremse auf dem Füllrohrende anzubringen, die den Ablauf der Wursthülle abbremst, um die pralle Füllung zu ermöglichen. Bei grosskalibrigen Würsten, die mit solch steifem Füllgut gefüllt werden, und bei denen daher die Gefahr besteht, dass beim Zusammenraffen des Wurstendes und anschliessendem Verschliessen die Wursthülle reisst, ist es ausserdem bekannt, die Bremskraft vor dem Verschliessen der Wursthülle durch Verschieben des Bremselementes in Füllrichtung zu verringern (DE-B-2 018 454). Dadurch wird das zum Zusammenraffen des Wurstzopfes benötigte zusätzliche Darmmaterial zur Verfügung gestellt. Bei dieser Arbeitsweise wird die zu füllende Wursthülle entweder als einseitig bereits vorverschlossener Einzelabschnitt auf das Füllrohr geschoben oder das zu füllende Darmmaterial wird vorher von einer auf das Füllrohr aufgeschobenen Darmraupe zur Verfügung gestellt. Beim Herstellen von Würsten auf kombinierten Füll- und Verschliessmaschinen, für die das benötigte Schlauchmaterial von einer Folienrolle abgezogen und auf dem Füllrohr gebildet wird, ist es zweckmässig, auf dem Füllrohr eine an sich bekannte Darmbremse zu verwenden, wenn eine pralle Füllung der Wurst erwünscht ist und ein Rückfluss des Füllgutes in die Schweisszone verhindert werden soll. Durch die Verwendung der Darmbremse besteht aber andererseits die Gefahr, dass bei empfindlichem Darmmaterial, insbesondere auch wegen der bei starker Beanspruchung gefährdete Schweissnaht, die durch die Darmbremse verursachte zusätzliche Reibung zu einer weiteren Belastung der Darmhülle führt. Diese Gefahr besteht insbesondere dann, wenn beim Füllen der Wurst eine verhältnismässig grosse Zugkraft benötigt wird, z.B. um die Wursthülle zunächst von der Folienrolle über die Formschulter durch das Schweissaggregat und schliesslich über das Füllrohr und die Darmbremse abzuziehen. Der Erfindung liegt die Aufgabe zugrunde, diese Schwierigkeiten zu vermeiden.

Diese Aufgabe wird dadurch gelöst, dass bei einem Verfahren zum Füllen und Verschliessen von Würsten auf kombinierten Füll- und Verschliessmaschinen, bei dem der für die Wurst benötigte Darm von einer Folienrolle abgezogen und auf dem Füllrohr gebildet wird, der zu füllende Darm während des Ablaufs vom Füllrohr in an sich bekannter Weise durch eine Darmbremse auf dem Füllrohrende abgebremst wird, erfindungsgemäss kontinuierlich oder intermittierend auf dem Füllrohr ein Darmvorrat zur Darmbremse in der Weise vorgeschoben wird, dass er dann für den Füllvorgang als Puffer lose zur Verfügung steht. Das erfindungsgemässe Verfahren hat den Vorteil, dass einerseits durch die Verwendung einer Darmbremse gewährleistet ist, dass die Wurst prall gefüllt wird und das Füllmaterial nicht zur Schweisszone zurückfliessen kann. Beim Füllen von grosskalibrigen Würsten mit besonders steifem Füllgut wird durch Verwendung einer Darmbremse, bei der die Bremskraft durch Verschieben in Füllrichtung vor dem Zusammenraffen des Zopfes und dem Verschliessen verringert wird, ein Platzen der Wursthülle vermieden. Andererseits wird durch Vorschieben eines Darmvorrats, der vor dem Füllvorgang lose vor der Darmbremse zur Verfügung steht, der Darm von den Kräften entlastet, die andernfalls für das Abziehen während des Füllvorgangs benötigt werden, so dass bei Verwendung von empfindlichen Därmen die Gefahr des Reissens oder eine Gefährdung der Schweissnaht vermieden wird.

Das Herstellen des für die Wurst benötigten Darmes von einer Folienrolle auf dem Füllrohr kann entweder durch unterschiedliche Schweissverfahren, aber auch durch Kleben erfolgen. Beim Abbremsen des Schlauchs durch die feststehende oder bewegliche Darmbremse auf dem Füllrohrende ist mit der Bezeichnung Füllrohrende ein gewisser Bereich auf dem Endteil des Füllrohres gemeint. Das Vorschieben des Darmvorrats, der vor der Darmbremse für den Füllvorgang lose zur Verfügung stehen soll, erfolgt beim kontinuierlichen Vorschub in der Weise, dass Rollen oder Bänder laufend soviel Darmvorrat fördern, dass vor der Darmbremse immer ein als Puffer dienender Vorrat vorhanden ist. Dies geschieht dadurch, dass die Geschwindigkeit des Vorschubs entsprechend den Produktionsdaten – Wurstlänge, Durchmesser, Taktzahl – angepasst wird. Wenn mehr Darmvorrat gefördert wird, als durch den Füllvorgang abgezogen wird, so kann durch eine vom überschüssigen Darmvorrat ausgelöste Schalteinrichtung der Darmvorschub unterbrochen und wieder in Gang gesetzt werden.

Beim intermittierenden Vorschub des Darmes wird vor Beginn des Füllvorgangs für die nächste Wurst der etwa benötigte Darmvorrat mittels einer taktweise arbeitenden Vorschubeinrichtung gefördert, die kurz vor Abschluss des Füllvorgangs oder während des Verschliessvorgangs geöffnet in die Ausgangsstellung zurückgeführt wird und anschliessend den nächsten Darmvorrat auf die

Darmbremse hinschiebt. Bei dieser Arbeitsweise können für den Vorschub mechanisch oder pneumatisch wirkende Vorschubelemente verwendet werden.

Da die Schweissnaht des geschlossenen Schlauches durch den Schweissvorgang erwärmt ist, kann es zweckmässig sein, nach dem Schweissvorgang eine Kühlung der Schweissnaht durch Beaufschlagung mit geeigneten Kühlmitteln vorzusehen, damit sich bei Bildung des Darmvorrates keine bleibenden Knickstellen bilden. Die Kühlung kann vor oder hinter der Vorschubeinrichtung erfolgen, solange der Darmvorrat noch ausreichend gestreckt ist.

Die Erfindung wird nachstehend anhand der Zeichnungen beispielsweise erläutert:

Fig. 1 zeigt das erfindungsgemässe Verfahren mit kontinuierlichem Vorschub;

Fig. 2 zeigt das erfindungsgemässe Verfahren mit intermittierendem Vorschub, wobei sich die Vorschubeinrichtung in der Ausgangsstellung befindet;

Fig. 3 zeigt die Erfindung wie in Fig. 2, jedoch mit der Vorschubeinrichtung in der Endstellung;

Fig. 4 zeigt die Erfindung wie in Fig. 1, jedoch mit einem als Gliederkette ausgebildetem Folienvorschub und zusätzlicher Kühl- und Abschalteinrichtung;

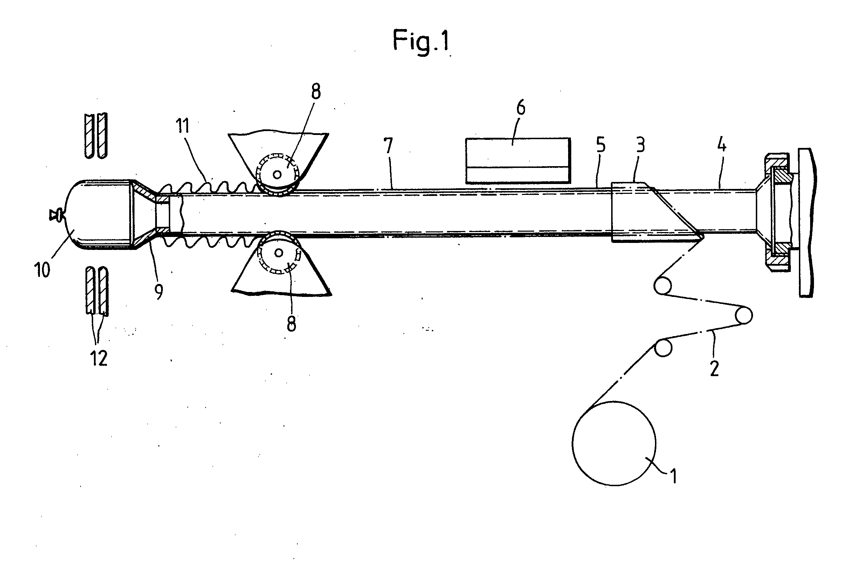

In Fig. 1 wird von einer Vorratsrolle 1 eine Flachfolie 2 über eine Formschulter 3 auf das Füllrohr 4 gefördert. Durch die Formschulter 3 wird die Folie zu einem Schlauch 5 mit überlappenden Kanten gebildet. Dieser vorgeformte Schlauch 5 wird durch ein Schweissaggregat 6 zum Verschweissen der überlappenden Kanten geführt, wodurch ein geschlossener Schlauch 7 entsteht. Der so gebildete Schlauch 7 wird durch die Transportwalzen 8 kontinuierlich in Füllrichtung in den Bereich der Innendarmbremse 9 geschoben, von der die sich bildende Wurst 10 während des Füllvorgangs den benötigten Teil des Schlauchs 7 abzieht. Die Vorschubgeschwindigkeit der Transportwalzen 8 ist dabei im Verhältnis zum Produktionstakt so eingestellt, dass vom Schlauch 7 ein Darmvorrat 11 entsteht, der zwischen den Transportwalzen 8 und der Innendarmbremse 9 lose zur Verfügung steht. Die Raff- und Verschliesselemente 12 der nicht gezeigten Verschliessmaschine sind in geöffnetem Zustand andeutungsweise wiedergegeben.

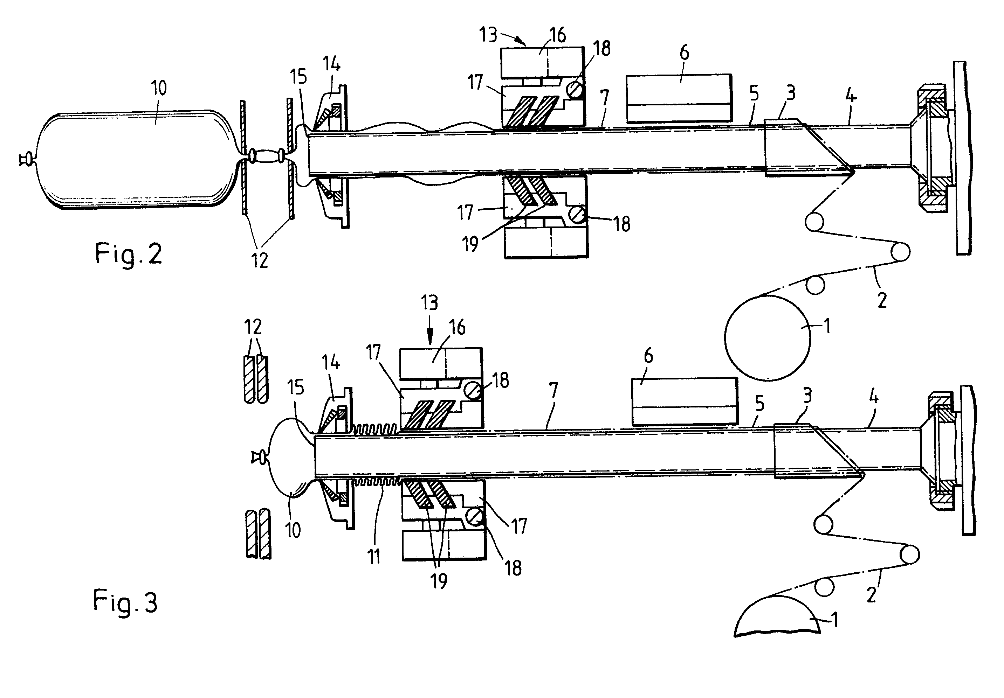

In Fig. 2 wird der in gleicher Weise wie in Fig. 1 hergestellte geschweisste Schlauch 7 durch die verschiebbare, in Ausgangsstellung befindliche Vorschubeinrichtung 13 zur Aussendarmbremse 14 auf dem Füllrohrende 15 geführt. In dieser Stellung der Vorschubeinrichtung 13 ist das Ende der vorhergehenden Wurst und der Anfang der zu füllenden Wurst durch die Raff- und Verschliesselemente 12 verschlossen und die Vorschubeinrichtung 13 gerade in ihre Ausgangsstellung zurückgeführt worden.

In Fig. 3 sind die Raff- und Verschliesselemente 12 geöffnet, um für die zu füllende Wurst 10 das Füllgut freizugeben. In diesem Augenblick ist die Vorschubeinrichtung 13 in Füllrichtung vorgeschoben, um den Darmvorrat 11 vor der Darmbremse 14 zur Verfügung zu stellen. Die Vorschubeinrichtung 13 gemäss Fig. 2 und 3 besteht aus einem Träger 16, in welchem Hebelarme 17 über Bolzen 18 schwenkbar gelagert sind. An den Hebelarmen 17 sind schräg nach vorn elastische Elemente 19 angebracht, die den Schlauch 7 auf dem Füllrohr 4 in Füllrichtung verschieben. Beim Rückhub der Vorschubeinrichtung 13 in die Ausgangslage werden die elastischen Elemente 19 mit geeigneten Mitteln geöffnet und dadurch vom Schlauch 7 abgehoben.

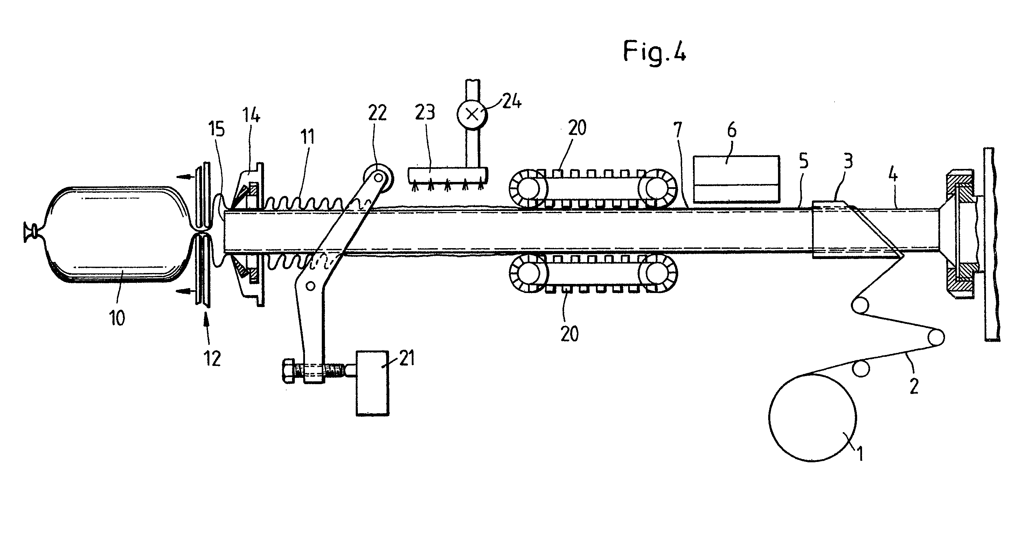

In Fig. 4 wird der Schlauch 7 in gleicher Weise wie in Fig. 1 hergestellt. Durch zwei umlaufende gegenüberliegende Gliederketten 20 mit aufgesetzten Profilstücken wird der Schlauch 7 kontinuierlich zur Aussendarmbremse 14 geschoben. Dabei bildet sich der Darmvorrat 11, von dem die sich bildende Wurst 10 ihren Bedarf abzieht. Damit während des Füllens immer ein Darmvorrat 11 vorhanden ist, ist die Geschwindigkeit der Gliederketten 20 einstellbar. Wird der Darmvorrat 11 während des Betriebes zu gross, wird der Schalter 21 durch die Tastrolle 22 betätigt und schaltet den Antrieb für die Gliederketten 20 und das Schweissaggregat 6 ab. Sobald der Darmvorrat 11 abgezogen ist, werden die Gliederketten 20 und das Schweissaggregat 6 wieder eingeschaltet.

Bei der Verschweissung der Folie 2 zum geschlossenen Schlauch 7 wird dieser zwangsläufig im Bereich der Schweissnaht erwärmt. Das kann bei der Bildung des Darmvorrates 11 im noch warmen Zustand des Schlauches 7 zu bleibenden Knickstellen im Bereich der Schweissnaht führen. Um diesem Umstand entgegenzutreten, ist eine Kühleinrichtung 23 angebracht. Die Durchflussmenge des Mediums wird durch das Ventil 24 eingestellt und geregelt.

Der Antrieb der Gliederketten 20 ist auch so einstellbar, dass bei besonderen Folien im Takt der Verarbeitung nur die Schlauchlänge zur Aussendarmbremse 14 gefördert wird, die jeweils für eine Wurst 10 benötigt wird. Anstelle der Gliederketten 20 können auch Transportbänder verwendet werden.

**Patentansprüche**

1. Verfahren zum Füllen und Verschliessen von Würsten auf kombinierten Füll- und Verschliessmaschinen, wobei der für die Wurst benötigte Darm von einer Folienrolle abgezogen und auf dem Füllrohr gebildet wird, dadurch gekennzeichnet, dass der zu füllende Darm während des Ablaufs vom Füllrohr durch eine Darmbremse auf dem Füllrohrende abgebremst wird, und dass kontinuierlich oder intermittierend auf dem Füllrohr ein Darmvorrat zur Darmbremse in der Weise vorgeschoben wird, dass er für den Füllvorgang als Puffer lose zur Verfügung steht.

2. Verfahren nach Anspruch 1, dadurch gekennzeichnet, dass beim intermittierenden Vorschub des Darmes vor Beginn des Füllvorgangs der für die nächste Wurst etwa benötigte Darmvorrat mittels einer Vorschubeinrichtung gefördert wird, die taktweise kurz vor dem Abschluss des Füllvorgangs oder während des Verschliessvorgangs geöffnet in die Ausgangsstellung zurückgeführt wird.

3. Verfahren nach Anspruch 1, dadurch gekennzeichnet, dass bei kontinuierlichem Vorschub dieser abgeschaltet wird, wenn sich ein grösserer Darmvorrat gebildet hat als für den Füllvorgang benötigt wird.

4. Verfahren nach Anspruch 1 bis 3, dadurch gekennzeichnet, dass der Schlauch nach dem Schweissvorgang auf dem Füllrohr vor der Bildung des Darmvorrates durch Kühlmittel beaufschlagt wird.

## Claims

1. A process of filling and closing sausages on combined filling and closing machines, wherein the casing required for the sausage is withdrawn from a roll of plastic sheeting and is shaped on the filling tube, characterized in that the casing to be filled is braked by a casing brake as the casing leaves the filling tube and that a supply of casing material is continuously or intermittently advanced on the filling tube toward the casing brake so that a loose supply is available as a buffer for the filling operation.

2. A process according to claim 1, characterized in that during the intermittent advance of the casing before the filling operation that casing supply which is required for the next sausage is conveyed by means of a feeder, which is cyclically returned in an open state to its initial position shortly before the completion of the filling operation or during the closing operation.

3. A process according to claim 1, characterized in that a continuous advance is discontinued when the casing supply which has been formed exceeds the supply which is required for the filling operation.

4. A process according to claims 1 to 3, characterized in that the tubing which has been welded on the filling tube is supplied on the filling tube with cooling fluid before the casing supply is formed.

## Revendications

1. Procédé pour le remplissage et la fermeture de saucisses sur une machine de remplissage et de fermeture combinés, dans lequel le boyau nécessaire pour la saucisse est tiré d'une feuille en rouleau et est mis sur le tube de remplissage, caractérisé en ce que, durant la course du tuyau de remplissage, le boyau à remplir est freiné au moyen d'un frein de boyau à l'extrémité du tube de remplissage, et en ce qu'une réserve de boyau est amenée de manière continue ou intermittente sur le tube de remplissage au frein de boyau de telle façon qu'elle se trouve librement à disposition comme tampon pour le processus de remplissage.

2. Procédé conforme à la revendication 1, caractérisé en ce que, lors d'une poussée de manière intermittente du boyau avant le début du processus de remplissage, la réserve de boyau approximativement nécessaire pour la saucisse suivante est transportée au moyen d'un dispositif de poussée qui est renvoyé à l'état ouvert peu avant la fin du processus de remplissage ou durant le processus de fermeture à la position de départ.

3. Procédé conforme à la revendication 1, caractérisé en ce que, lors d'une poussée de manière continue, celle-ci est interrompue lorsqu'il s'est formé une réserve de boyau plus grande que ce n'est nécessaire pour le processus de remplissage.

4. Procédé conforme aux revendications 1 à 3, caractérisé en ce que, après le processus de soudage sur le tube de remplissage et avant la constitution de la réserve de boyau, le tuyau flexible est traité par un agent de refroidissement.

# Fig.1

0 068 578

Fig. 2

Fig. 3

0 068 578

Fig.4

0 068 578